# EUROPEAN PATENT APPLICATION

(11) **EP 0 930 566 A2**
(43) Date of publication of application: **21.07.1999**
(21) Application number: 99104967.7
(22) Date of filing: 06.07.1993
(51) Int. Cl.: G06F 9/44

(54) **Method and system for composing objects**

(30) Priority: 06.07.1992 US 909983
(62) Divisional of application: 93110799.9
(71) Applicant: MICROSOFT CORPORATION, Redmond, Washington 98052-6399 (US)
(72) Inventor: Atkinson, Robert G., Woodinville, Washington 98072 (US); Williams, Antony S., Redmond, Washington 98053 (US); Jung, Edward K., Redmond, Washington 98052 (US)
(74) Representative: Grünecker, Kinkeldey, Stockmair & Schwanhäusser Anwaltssozietät

(57) **Abstract**

A method of composing a first object with a second object, the first object having object code by invoking a compose function member of the object code of the first object, passing the second object, to create an instance of a composite object that refers to the composition of the first object with the second object.

## Description

### Technical Field

This invention relates generally to a computer method and system for naming and binding objects and, more specifically, to a generalized method and system for naming liked objects, which may be contained in other objects, locating and binding to the sources of linked objects, and reducing the number of server invocations required to bind an object.

### Background of the Invention

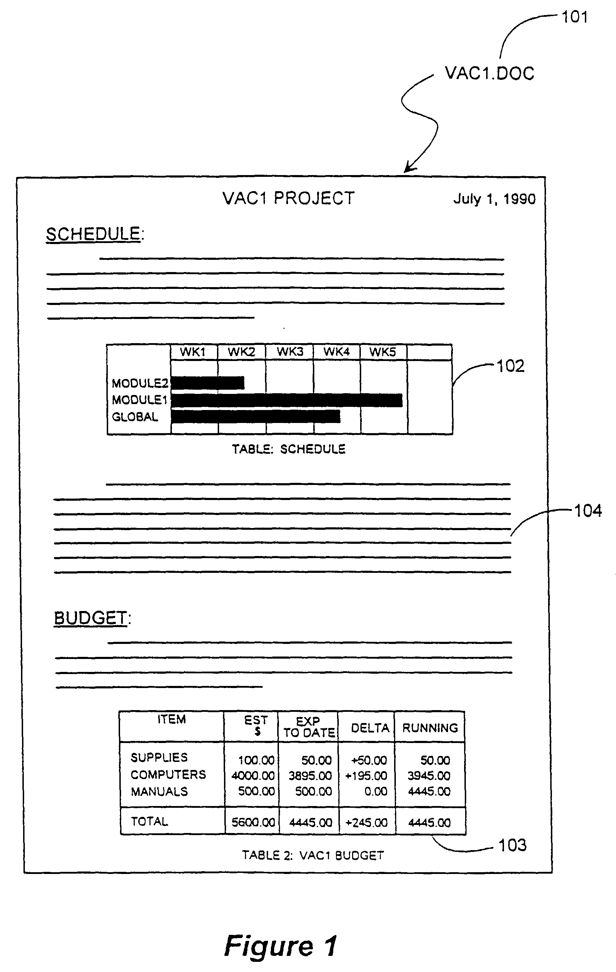

Current document processing computer systems allow a user to prepare compound documents. A compound document is a document that contains information in various formats. For example, a compound document may contain data in text format, chart format, numerical format, etc. Figure 1 is an example of a compound document. In this example, the compound document 101 is generated as a report for a certain manufacturing project. The compound document 101 contains scheduling data 102, which is presented in chart format; budgeting data 103, which is presented in spreadsheet format; and explanatory data 104, which is presented in text format. In typical prior systems, a user generates the scheduling data 102 using a project management computer program and the budgeting data 103 using a spreadsheet computer program. After this data has been generated, the user creates the compound document 101, enters the explanatory data 104, and incorporates the scheduling data 102 and budgeting data 103 using a word processing computer program.

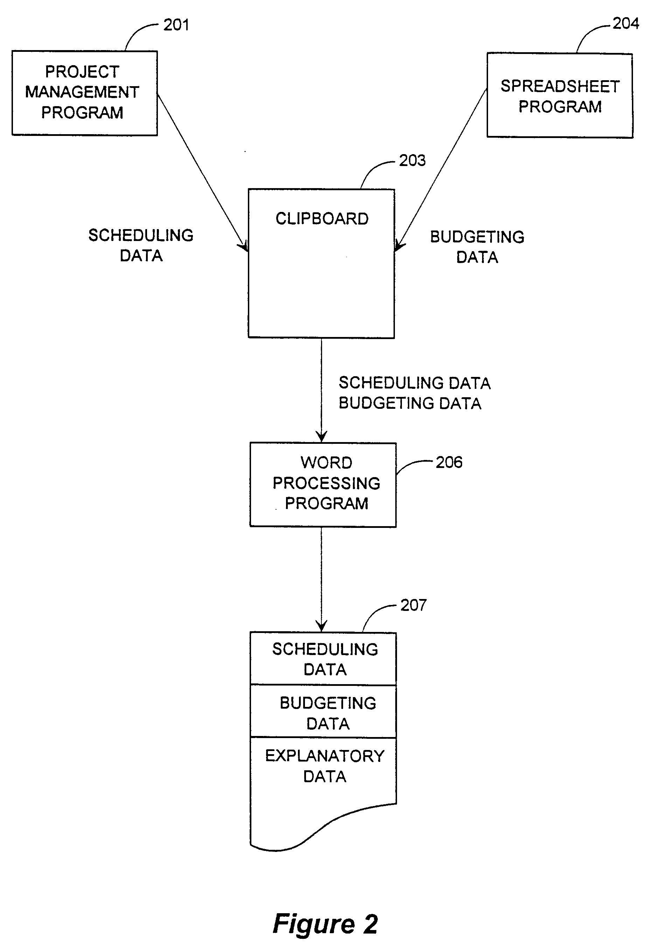

Figure 2 shows how the scheduling data, budgeting data, and explanatory data can be incorporated into the compound document. The user generates scheduling data using the project management program 201 and then stores the data in the clipboard 203. The user generates budgeting data using the spreadsheet program 204 and then stores the data in the clipboard 203. The clipboard 203 is an area of storage (disk or memory) that is typically accessible by any program. The project management program 201 and the spreadsheet program 204 typically store the data into the clipboard in a presentation format. A presentation format is a format in which the data is easily displayed on an output device. For example, the presentation format may be a bitmap that can be displayed with a standard bitmap block transfer operation (BitBlt). The storing of data into a clipboard is referred to as "copying" to the clipboard.

After data has been copied to the clipboard 203, the user starts up the word processing program 206 to create the compound document 101. The user enters the explanatory data 104 and specifies the locations in the compound document 101 to which the scheduling data and budgeting data that are in the clipboard 203 are to be copied. The copying of data from a clipboard to a document is referred to as "pasting" from the clipboard. The word processing program 206 then copies the scheduling data 102 and the budgeting data 103 from the clipboard 203 into the compound document 101 at the specified locations. Data that is copied from the clipboard into a compound document is referred to as "embedded" data. The word processing program 206 treats the embedded data as simple bitmaps that it displays with a BitBlt operation when rendering the compound document 101 on an output device. In some prior systems, a clipboard may only be able to store data for one copy command at a time. In such a system, the scheduling data can be copied to the clipboard and then pasted into the compound document. Then, the budgeting data can be copied to the clipboard and then pasted into the compound document.

Since word processors typically process only text data, users of the word processing program can move or delete embedded data, but cannot modify embedded data, unless the data is in text format. Thus, if a user wants to modify, for example, the budgeting data 103 that is in the compound document 101, the user must start up the spreadsheet program 204, load in the budgeting data 103 from a file, make the modifications, copy the modifications to the clipboard 203, start up the word processing program 206, load in the compound document 101, and paste the modified clipboard data into the compound document 101.

Some prior systems store links to the data to be included in the compound document rather than actually embedding the data. When a word processing program pastes the data from a clipboard into a compound document, a link is stored in the compound document. The link points to the data (typically residing in a file) to be included. These prior systems typically provide links to data in a format that the word processing program recognizes or treats as presentation format. For example, when the word processing program 206 is directed by a user to paste the scheduling data and budgeting data into the compound document by linking, rather than embedding, the names of files in which the scheduling data and budgeting data reside in presentation format are inserted into the document. Several compound documents can contain links to the same data to allow one copy of the data to be shared by several compound documents.

### Summary of the Invention

It is an object of the prsent invention to provide a method and system for generating links to data incorporated within a compound document.

It is another object of the present invention for binding links to the underlying data.

It is another object of the present invention for interfacing with these links in a manner that is independent of the underlying data.

It is another object of the present invention for linking to data nested to an arbitrary level within a compund document.

These and other object, which will become apparaent as the invention is more fully described below, are provided by a method and system for naming and binding data objects. In a preferred embodiment, a link to an object incorporated is stored as a moniker. A moniker is an object that encapsulates the information needed to access teh incorporated data and provides methods whihc bind to the incorporated data.

### Brief Description of the Drawings

Figure 1 is an example of a compound document.
Figure 2 shows how the scheduling data, budgeting data, and explanatory data can be incorporated into the compound document.
Figure 3 shows an example of the relationship of a linked object to its source.
Figure 4 is a block diagram of a sample instance of an object.
Figure 5 is a block diagram showing public view of an object.
Figure 6 is a block diagram showing a typical instance of the IMoniker interface.
Figure 7 is a block diagram showing the moniker that is stored in the executive summary compound document 303 in Figure 3.
Figure 8 is a block diagram showing a typical composite moniker object data structure.
Figure 9 is a flow diagram of an implementation of the generic composite moniker method ComposeWith.
Figure 10 is a flow diagram for the function MkCreateGenericComposite.
Figure 11 is a flow diagram of a FindLastElt method of a typical implementation. This method creates two monikers.
Figure 12 is a flow diagram for the FindFirstElt method of a typical implementation.
Figure 13 is a flow diagram of the BindToObject method for a typical implementation.
Figure 14 is a flow diagram of the BindToObject method for a typical implementation of a file moniker.
Figure 15 is a flow diagram of the BindToObject method for a typical implementation of an item moniker.
Figure 16 is a flow diagram of the BindToStorage method for a typical implementation of WItemMoniker.
Figure 17 shows an overview flow diagram for the reduce method for the generic composite moniker interface.
Figure 18 shows an overview flow diagram of the reduced method for a typical implementation of a file moniker.
Figure 19 shows an overview flow diagram of the reduced method for a typical implementation of the word processing item moniker WItemMoniker.
Figure 20 shows an overview flow diagram for the function MkParseUserName.
Figure 21 shows an overview flow diagram for the method ParseUserName for a typical implementation of a file moniker.
Figure 22 is a diagram illustrating a linked object.

### Detailed Description of the Invention

The present invention provides a generalized method for naming and binding to linked data. In a preferred embodiment, a compound document that incorporates linked data stores a persistent data handle, called a "moniker," which is a reference to the link source. A moniker is a data object contains information to identify the linked data and provides methods through which an application program can bind to the linked data.

The binding process returns an instance of an interface through which the linked data can be accessed. In some cases, the moniker may link data that is itself embedded data within another compound document. For example, a moniker may link to a range of cells within a spreadsheet table that is contained in a word processing document. A moniker may link to data at any level within a compound document. During the binding process, several applications may be invoked to locate the link data. For example, to link to the range of cells within a spreadsheet that is within a word processing document, the word processing program may be invoked to locate embedded spreadsheet data and the spreadsheet program may be invoked to bind to the range of cells.

The present invention defines an abstract class (an interface) through which a moniker is accessed. Typically, each application program that provides data which can be linked into a compund document implementation of the moniker interface to support.

In a preferred embodiment of the present invention, an application program that creates a compound document controls the manipulation of linked or embedded data generated by another application. In object-oriented parlance, this data is referred to as an object. (The reference Budd, T., "An Introduction to Object-Oriented Programming," Addison-Wesley Publishing Co., Inc., 1991, provides an introduction to object-oriented concepts and terminology.) An object that is either linked or embedded into a compound document is "contained" within the document. Also, a compound document is referred to as a "container" object and the objects contained within a compound document are referred to as "containee" objects. Referring to Figures 1 and 2, the scheduling data 102 and budgeting data 103 are containee objects and the compound document 101 is a container object. The user can indicate to the word processor that the user wants to edit a containee object, such as the budgeting data 103. When the user indicates that the budgeting data 103 is to be edited, the word processing program determines which application should be used to edit the budgeting data (e.g., the spreadsheet program) and launches (starts up) that application. The user can then manipulate the budgeting data using the launched application, and changes are reflected in the compound document. The same procedure is used whether the budgeting data is stored as an embedded or linked object.

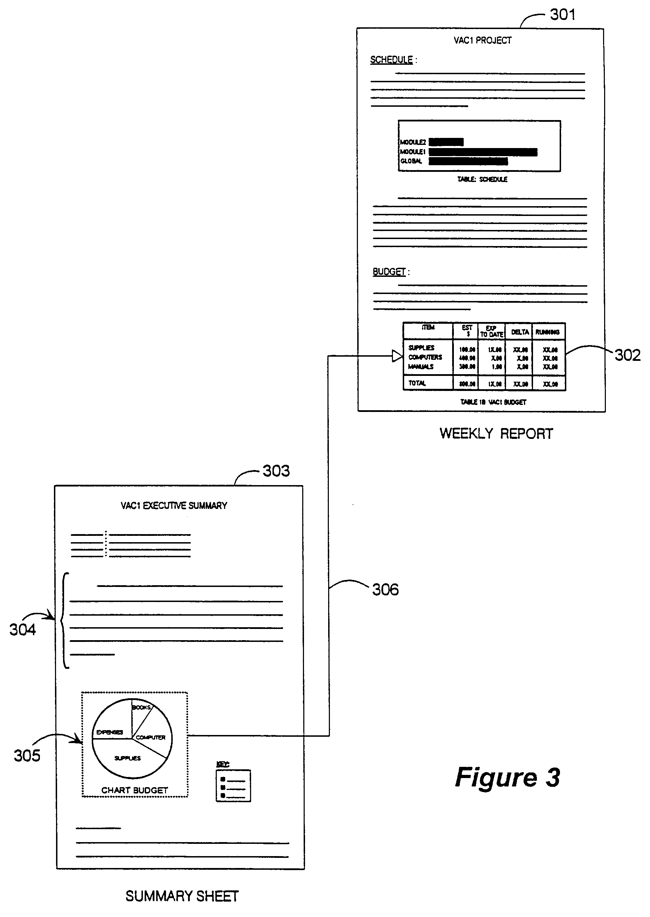

Figure 3 is a block diagram showing a sample compound document. The weekly project report 301 is the same compound document of Figure 1. The executive summary report 303, contains a budgeting chart 305 that is linked to the weekly project 301. The weekly project 301 contains an embedded spreadsheet 302. The embedded spreadsheet 302 was created by the spreadsheet program 204 in Figure 2. The data for this spreadsheet, the budget for the project, is stored within the storage the weekly project report 301 because it is an embedded object. The executive summary document 303 is a compound document which contains native text 304 and a contained object, the budget chart 305. The budget chart 305 is linked to the data contained within in the spreadsheet 302 which is embedded in the compound document 301.

In a preferred embodiment, application programs ("applications") cooperate using object linking and embedding facilities to create and manipulate compound documents. An application that creates a compound document is referred to as a client application, and an application that creates and manipulates containee objects are referred to as server applications. An application can behave as both a client server. Referring to Figure 2, the project management program 201 and the spreadsheet program 204 are server applications, and the word processing program 206 is a client application. A client application is responsible for selection of the various objects within the container object and for invoking the proper server application to manipulate the selected containee object. A server application is responsible for manipulating the contents of the containee objects.

In a preferred embodiment, applications are provided with an implementation-independent Application Programming Interface (API) that provides the object linking and embedding functionality. The API is a set of functions that are invoked by client and server applications. These functions manage, among other things, the setup and initialization necessary for client applications to send and receive messages and data to and from server applications. The API provides functions to invoke the correct server application to act upon a particular containee object and to manipulate containee objects.

In addition, the object linking and embedding API defines "interfaces" through which client applications can communicate with their contained objects. An interface is a set of methods which abide by certain input, output, and behavior rules. If a contained object supports a particular interface, the client application can invoke the methods of that interface to effect the defined behavior. In a preferred embodiment, the client application is not allowed direct access to the object data; it must manipulate the object using the supported interfaces. A client application is bound to a contained object through a pointer to an interface. The client application accesses the object by invoking the methods of the interface. To access the object data, the methods may send messages to the server application requesting the specified access. In a preferred embodiment, messages are sent between clients and servers using interprocess communications mechanisms provided by the underlying operating system.

An example will help illustrate the relationship between a client process and a server process. Referring again to Figure 1, if a user wants to edit the budgeting data 103 of the compound document 101, then the following sequence of events occurs. First, the user starts up the word processor program, which is dynamically linked to the object linking and embedding API. Second, the user opens the compound document for editing. Third, the user selects the budgeting data, which is a containee object, and indicates that the selected object is to be edited. Fourth, the client application invokes a client API routine for performing an action on an object passing the routine a handle (which uniquely identifies the selected object) to the object and an indicator that the action is edit. Fifth, the client API routine determines that the spreadsheet program provides the actions for the budgeting data. Sixth, the client API code starts up the spreadsheet program as a server process, if it is not already started. Seventh, the word processor application sends a message to the spreadsheet program that it should edit the budgeting data. Eighth, the server API code receives the request to edit and invokes a routine in the spreadsheet program for editing the data. When editing is complete, the spreadsheet routine returns to the server API code. The server API code sends a message to the word processor application to indicate that editing is complete. The client API code receives the message and returns from its invocation. Upon return from the invocation, the word processor application knows that the editing is complete.

In addition to the client and server API, the object linking and embedding facilities of the present invention provide information to client and server applications through a persistent global "registry." This registry is a database of information such as (1) for each type of object, the server application that implements the object type, (2) the actions that the each server application provides to client applications, (3) where the executable files for each server application are located, and (4) whether each server application has an associated object handler.

In object-oriented parlance, an interface is an "abstract class": a class with a definition of its data and methods, but with no implementation for those methods. It is the responsibility of the server application for the object "class" to provide the actual code for the methods available to manipulate the object.

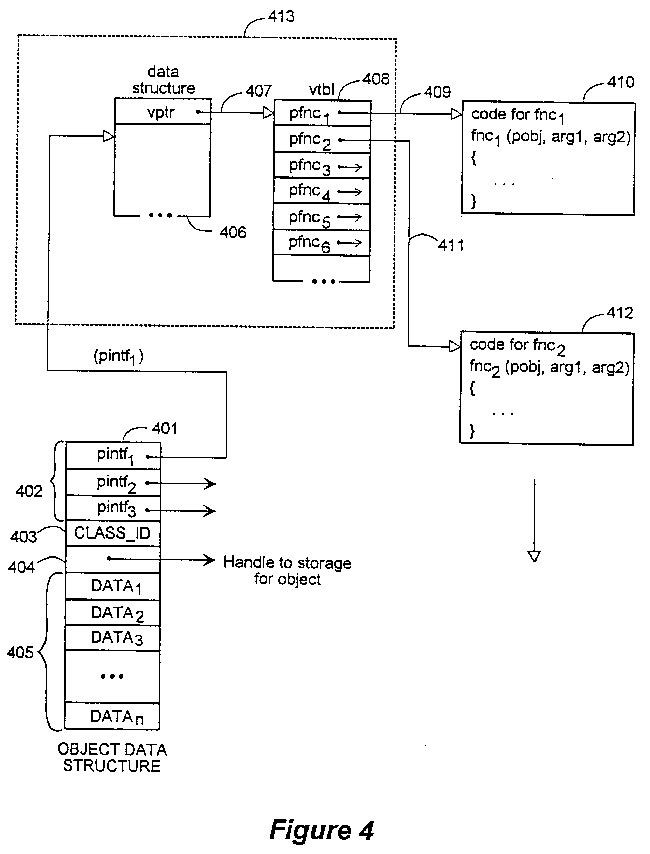

Figure 4 is a block diagram of a sample instance of an object. In a preferred embodiment, the layout of the instance conforms to the model defined in U.S. Patent Application Serial No. 07/682,537, entitled "A Method for Implementing Virtual Functions and Virtual Bases in a Compiler for an Object Oriented Programming Language" which is hereby incorporated by reference. The instance contains object data structure 401 and interface data structure 413 for each supported interface. The object data structure 401 contains pointers 402 to the interface data structures 413 and may contain private data of the instance. The private data of this sample instance includes a class identifier 403, handle 404 to the storage for the object, and data 405 for tracking the state of the object. The class identifier is used to access the appropriate server application for the object. It is similar to a data structure "type" used in programming languages. The interfaces can determine the server for the object by using the CLASS_ID as an index into the persistent global registry. As shown in Figure 4, each interface data structure 413 contains a private data structure 406 and a virtual function table 408. The private data structure 406 contains a pointer 407 to the virtual function table 408. The virtual function table 408 contains pointers to the code that implements the methods of the interface.

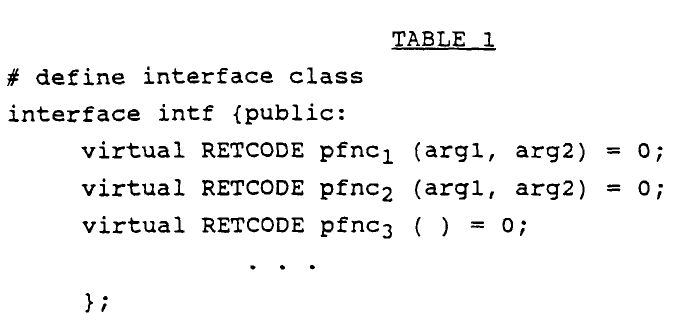

Table 1 represents the definition for the interface for the first entry pintf₁ in the object data structure 401. In Table 1, the word "interface" is defined to mean a C++ class. The definition shows three methods with their arguments. The "=0" at the end of each argument list indicates that the method has no code implementation. In the C++ programming language, these functions are termed "pure virtual functions". A class with all pure virtual functions is referred to as an abstract class.

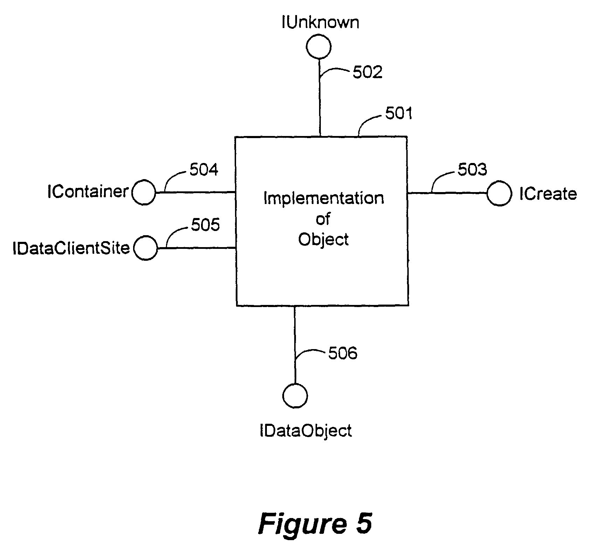

Figure 5 is a block diagram showing public view of an object. A public view of an object is the various interfaces that the object supports 502-506. Each interface provides methods through which client applications can access the object. Each object supports an IUnknown interface 502. Applications use the IUnknown interface 502 to determine which other interfaces the object supports. The implementation of IUnknown interface 502 for a particular object knows what other interfaces it supports and returns to the invoking application pointers to those interfaces. In a preferred embodiment, the method IUnknown::QueryInterface is used for this purpose. Interfaces 503 through 506 are examples of typical interfaces that can be supported by an object. For example, the ICreate interface 503 provides methods for creating a new instance of the object. The IContainer interface 504 provides methods for listing the containee objects that are contained within the object. The IDataClientSite interface 505 provides methods to be used by the servers communicating with the container object. The IDataObject interface 506 provides methods for manipulating the object data.

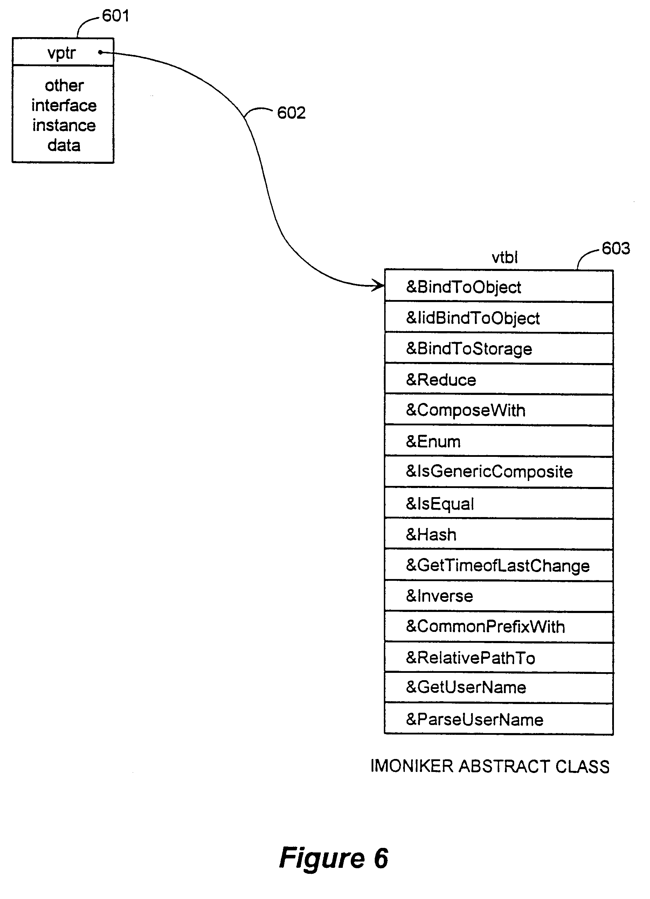

Figure 6 is a block diagram showing a typical instance of the IMoniker interface. Appendex A contains a detailed description of the methods of the IMoniker interface. The instance data structure includes object data structure 601 and virtual function table 603. The object data structure 601 contains a pointer 602 to the virtual function table 603 and private instance data. Virtual function table 603 contains pointers to the code that implements the method of the IMoniker interface. Table 2 is the class definition for the IMoniker interface.

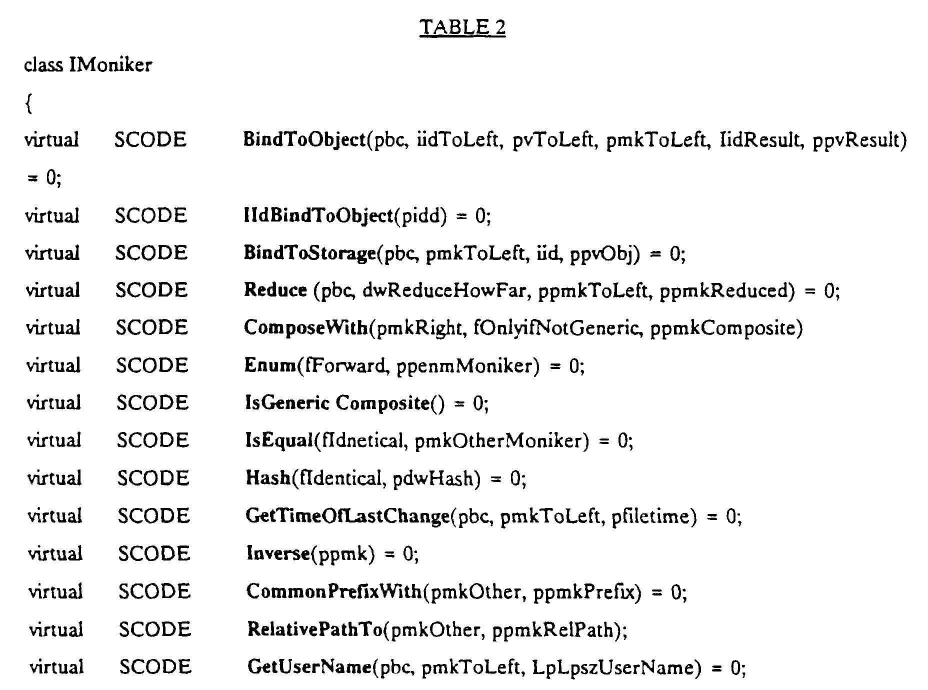

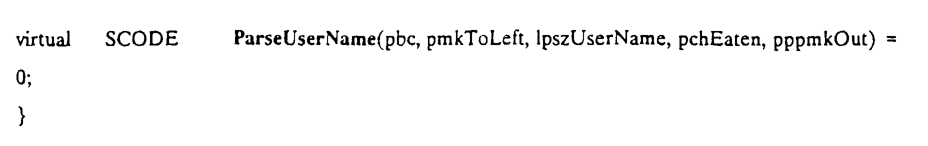

In addition to these methods, an IMonkier implementation typically supports the functions MkParseUserName, MkCreateIBindContext, MkCreateGenericComposite, MkCreateFileMonikor, MkCreateItemMoniker, and MkCreateAntiMoniker, which are defined below.

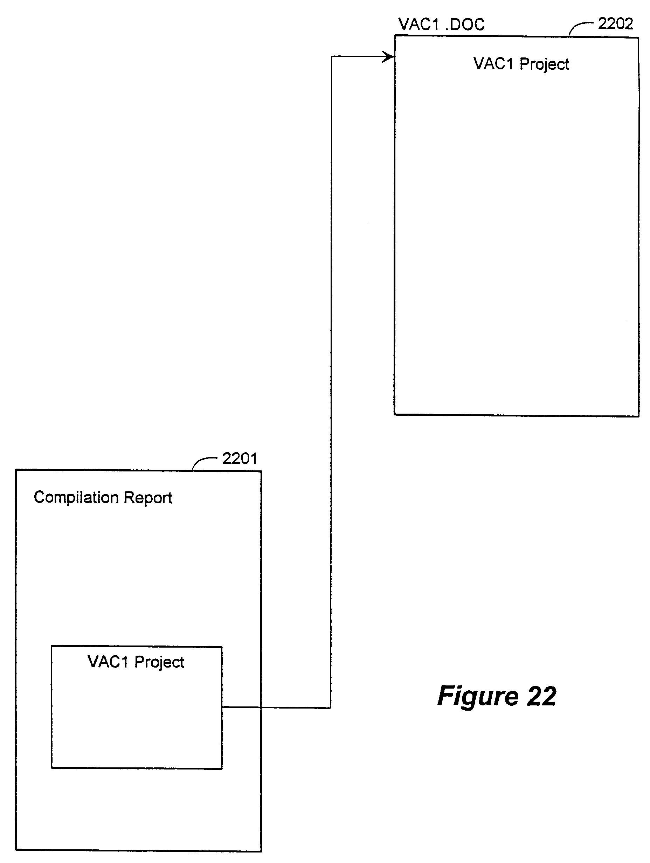

Figure 22 is a diagram illustrating a linked object. In this example, the compound document 2201 is a compilation of various project reports, such as the report stored in compound document 101. Compound document 2201 contains a link to the compound document 2202. The link indicates that the compound document stored in the file "VAC1.DOC" is logically within the compound document 2201. In a preferred embodiment, the link is stored as a moniker. A moniker is an instance of a class (a moniker object) that provides methods to access the source of the link. A moniker object encapsulates data that identifies the link source and provides methods through which an application program can access the link source. For example, when the link is created from compound document 2201 to compound document 2202, the word processor invokes a function to instantiate a moniker object that points to the "VAC1.DOC" file. The function returns a pointer to the new moniker object. The word processor then stores the moniker object within the compound document 2201. The word processor accesses the link source through the methods of the moniker object. For example, the monkier class supports a "bind" method. The bind method determines where the link source is located and returns a pointer to an object which represents the source. In this example, the bind method of the moniker object would determine that the source is storedin file "VAC.DOC," instantiate an object to represent a file, and return a pointer to the instantiated object. The word processor could then invoke the methods of the returned file object to access the source data.

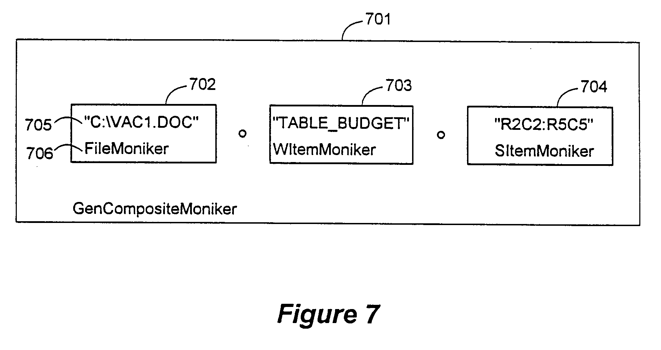

Figure 7 is a block diagram showing the moniker that is stored in the executive summary compound document 303 in Figure 3. This moniker represents the linked chart object 305. Because the link points to data embedded within a compound document, the moniker is represented as a composte of a link need to identify the compound document and a linked need to identify the data within the compound document. The link is referred to as a composite moniker. A composite moniker contains component moniker ordered in a left ot right manner in an embedding hierarchy. The composite moniker 701 comprises three component monikers, 702, 703, and 704. Component moniker 702 references the compound document 301. Component moniker 702 contains a CLASS_ID (FileMoniker), a user readable name "C:\VAC1.DOC" of the compound document 301. Component moniker 703 references the embedded object compound document 301. The word processing application understands component moniker 703 and is used to locate the embedded spreadsheet. Component moniker 703 contains CLASS_ID (WItemMoniker) and a user readable name of the embedded spreadsheet. The CLASS_ID "WItemMoniker" indicates that the word processor recognizes this component moniker. Component moniker 704 references the range of data within the embedded spreadsheet object 302. Component moniker 704 contains CLASS_ID (SItemMoniker) and a user readable name for the range. The CLASS_ID "SItemMoniker" indicates that the spreadsheet program recognizes this component moniker. The composite moniker object data structure includes data structure 801 and virtual function table 802. Data structure 801 contains the CLASS_ID 803 and a pointer 804 to the linked list 805. The CLASS_ID, in this example, indicates the moniker of type ID_GenCompositeMoniker.

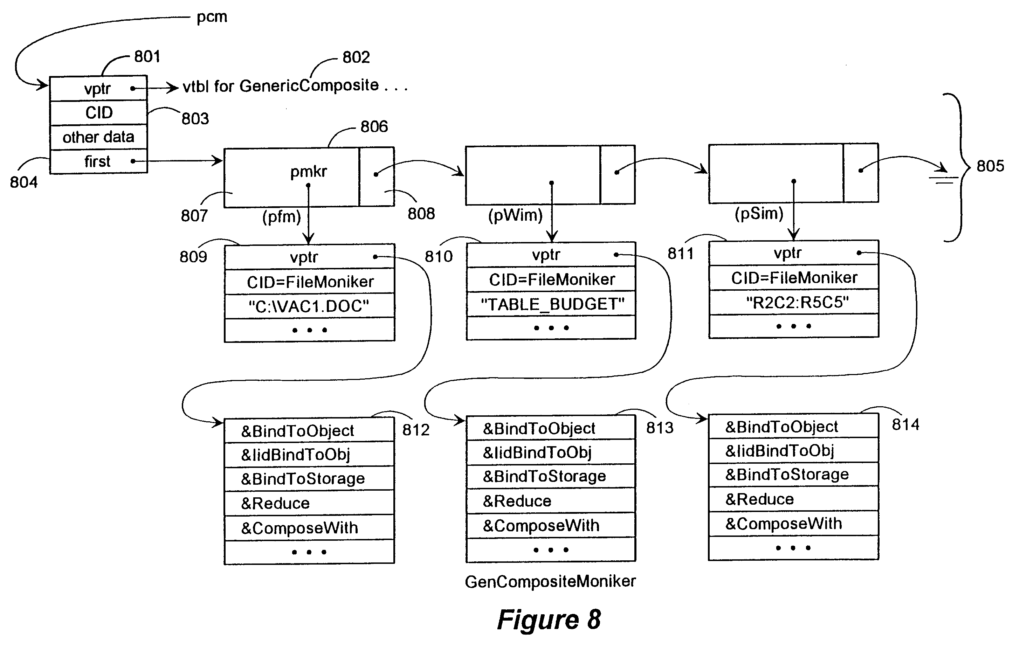

Figure 8 is a block diagram showing a typical composite moniker object data structure. The linked list 805 contains one entry 806 for each component moniker. Each entry contains a pointer to the component moniker 809-811.

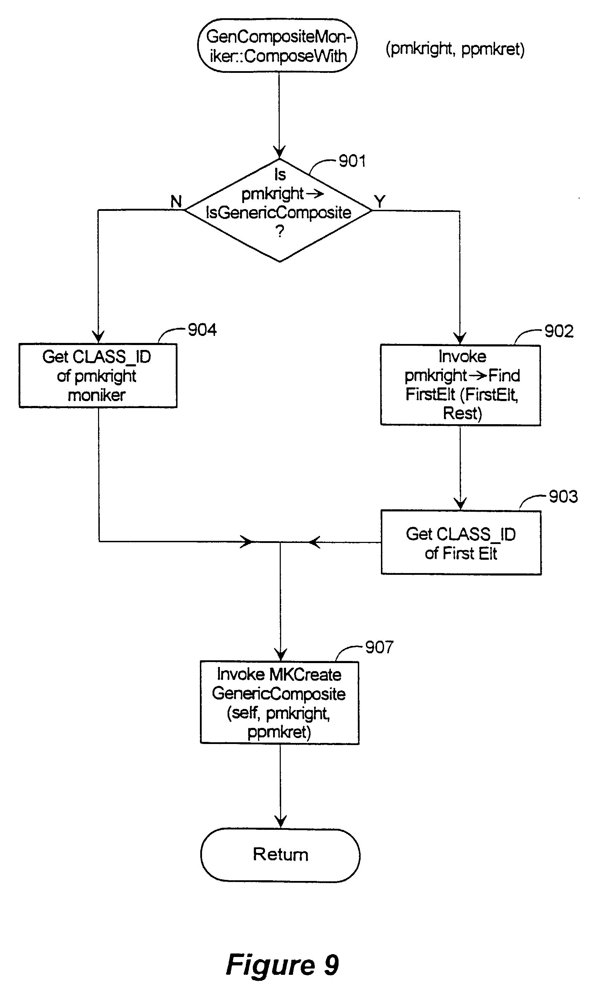

Figure 9 is a flow diagram of an implementation of the generic composite moniker method ComposeWith. The method GenCompositeMOniker::ComposeWith creates a new composite moniker with the specified moniker on the left and the designated moniker as the right portion of the new composite moniker. This method returns a pointer to the new composite moniker. In step 901, the method calls the IsGenericComposite? method of the designated moniker to determine whether it is a generic composite moniker. If it is not, the method continues at step 904, otherwise it continues at step 902. In step 902, the method invokes the FindFirstElement method of the designated, which returns a pointer to the first component moniker and pointer to the rest of the component moniker. In step 903, the methods extracts the CLASS_ID of the first component moniker. In step 904, the function extracts the CLASS_ID of the designated moniker. When steps 903 and 904 are complete, the method has obtained the CLASS_ID of the moniker it will use as the right portion of the new composite moniker. In step 907, the method invokes the MkCreateGenericComposite function to create a new generic composite moniker specified moniker on the left and the designated moniker on the right, and then the method returns with a pointer to the new composite moniker.

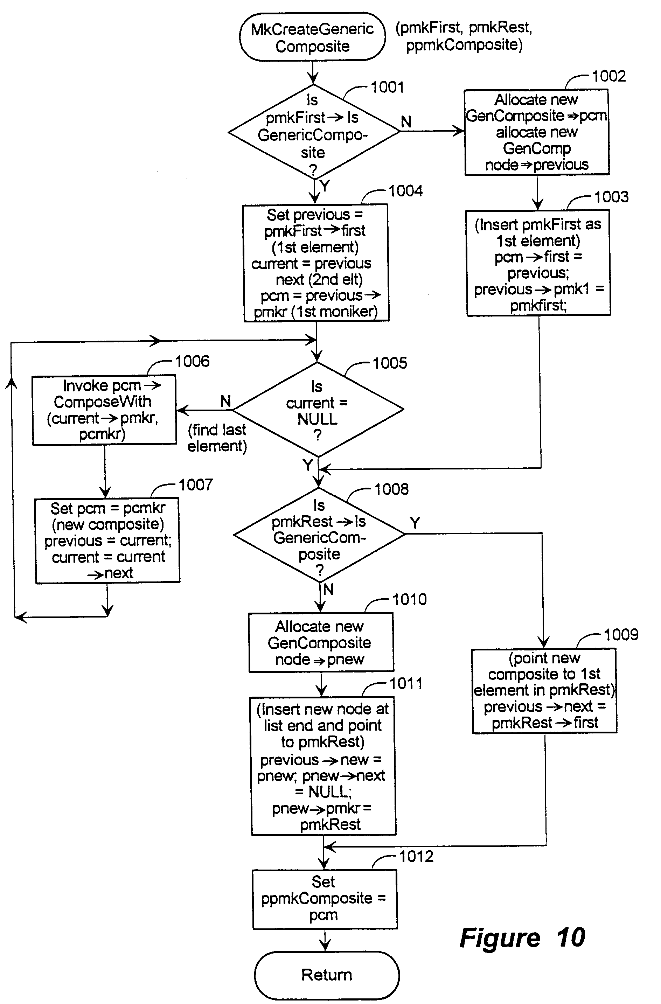

Figure 10 is a flow diagram for the function MkCreateGenericComposite. This function takes two monikers, a left and a right, creates a new composite moniker comprising the left and right monikers and returns a pointer to the new moniker. In step 1001, the function calls the pmkFirst::IsGenericComposite? method to determine whether the left moniker is a generic composite moniker. If it is, the function continues at step 1004, otherwise, it continues at step 1002. In steps 1002 and 1002, the function allocates a new generic composite moniker and stores a copy of the left moniker as its first element. In step 1002, the function allocates the necessary data structures and allocates a new generic composite moniker node in the linked list and stores this value in the variable previous. In step 1003, the function inserts the left-hand moniker passed in (pmkFirst) as the first element in the new composite moniker pointed to by pcm. Then the method continues at step 1008. In step 1004 through 1007, the function loops to create new composite moniker that contains the component monikers of the original left moniker. The loop traverses the elements of the linked list of the original left moniker and inserts a copy of the component monikers into the new composite moniker. In step 1004, the function initialises several variables in order to search for the last element of the left moniker. To do this, it sets the variable previous to point to the first element of the linked list, the variable current to point to the second element of the linked list, and pcm to the first moniker pointed by the first element of the linked list. In step 1005, the function determines whether the variable current is NULL. If it is, then variable previous points to the last element in the left composite moniker which indicates that all the component moniker have been invalid into the new composite moniker and the function continues its step 1008, otherwise, the function continues at step 1006. In step 1006, the function invokes the ComposeWith method of the moniker pointed to by the variable pcm passing it the moniker pointed to by the variable current. In step 1007, the function sets the variable pcm to point to this new composite moniker and updates the variables previous and current to point to the next two elements in the linked list and loops to step 1005 to determine whether the variable previous points to the end of the linked list. In step 1008, the function calls pmkRestIsGenericComposite? method to determine whether the right moniker is a generic composite moniker. If it is not, the function continues its step 1010, else it continues at step 1009. In step 1009, the function appends the linked list of the right moniker to the new left moniker. The function then continues in step 1012. In steps 1010 and 1011, the function appends a new element pointing to the right moniker to the new left moniker. In step 1012, the function sets the return value ppmkComposite to the pcm, the newly composed moniker, and returns.

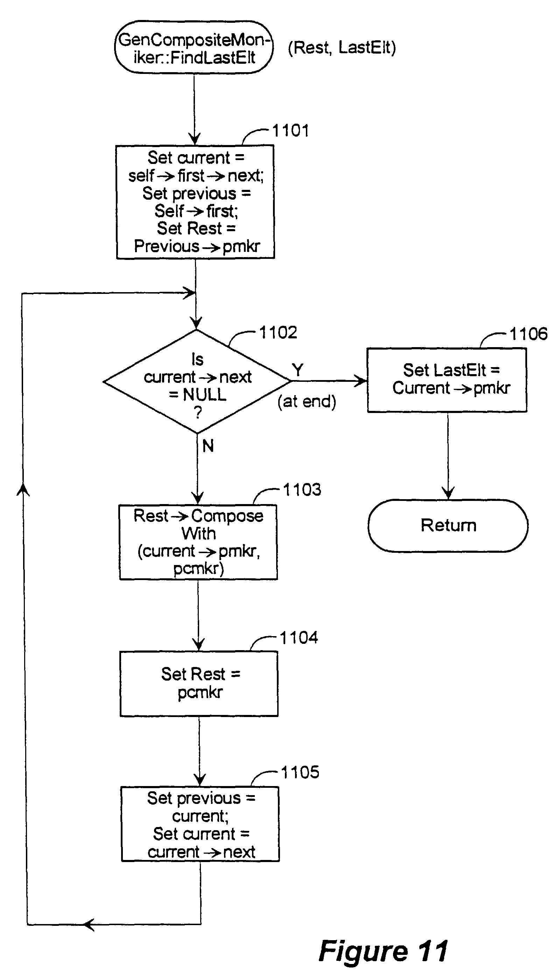

Figure 11 is a flow diagram of a FindLastElt method of a typical implementation. This method creates two monikers. The first moniker corresponds to the last component moniker in the specified moniker. The second moniker corresponds to the remainder of the specified moniker. In step 1101, the method sets the variable current to point to second element in the linked list, the variable previous to the first element in the linked list, and the variable rest to point to the first component moniker. Steps 1102 through 1105 traverse the linked list of the specified moniker creating the second moniker. In step 1102, if the variable current points to the last element, the method continues at step 1106, else the method continues at step 1103. In step 1106, the method sets the parameter LastElt to point to the moniker pointed to by variable current, and returns.

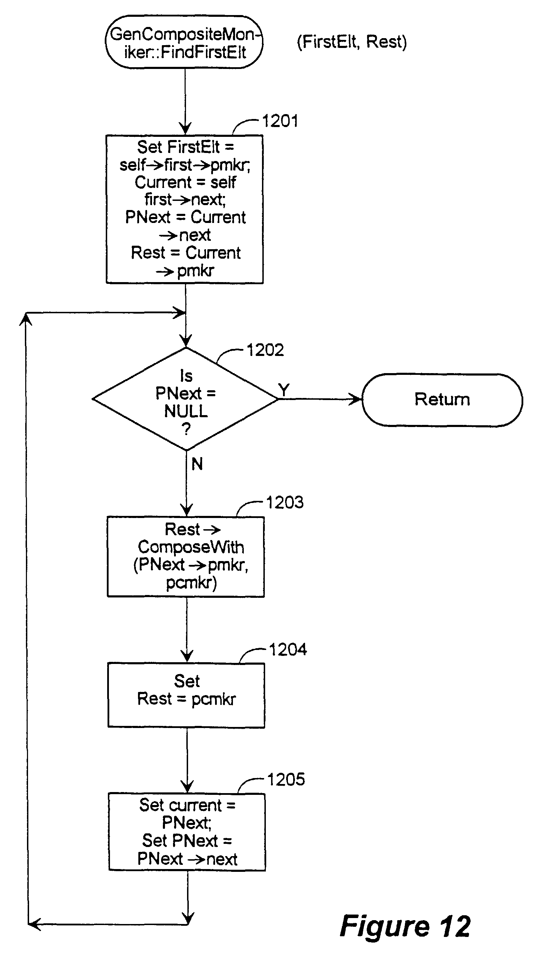

Figure 12 is a flow diagram for the FindFirstElt method of a typical implementation. This method is analogous to the FindLastElt method but returns a pointer to the first component moniker and a pointer to a new composite moniker comprising the remaining component monikers.

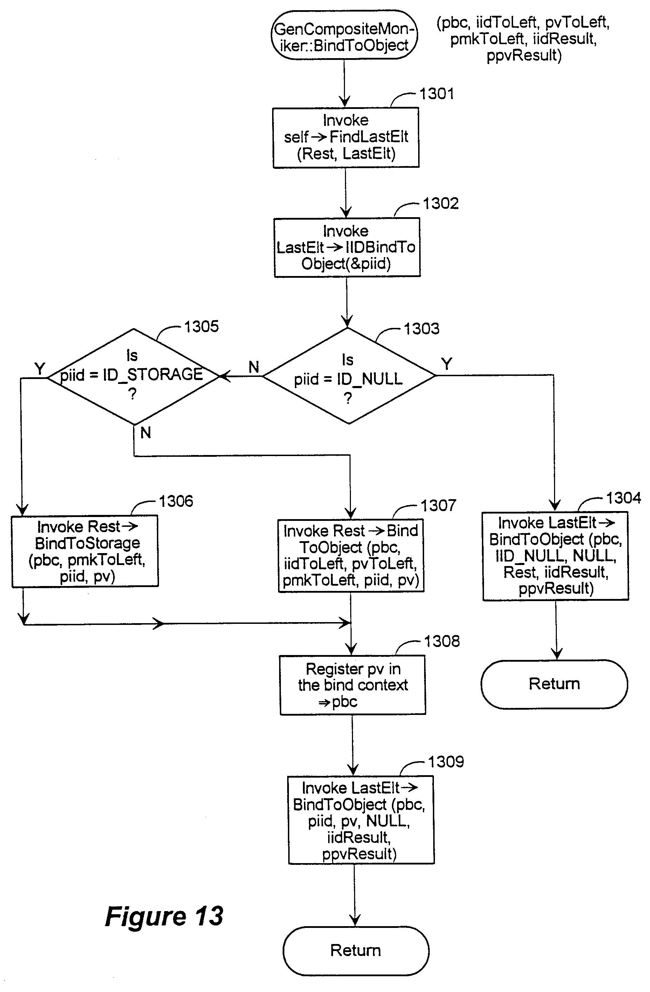

Figure 13 is a flow diagram of the BindToObject method for a typical implementation. The method BindToObject recursively invokes either BindToObject (or BindToStorage) to obtain an object (or storage) that can be used to locate and bind to the object indicated by the specified moniker. In general, the BindToObject method returns the object or storage indicated by the specified moniker using the method of its prefix component moniker. This method invokes the BindToObject method of the last component moniker, which in turn invokes the BindToObject methods of its prefixmoniker in a right to left manner. The BindToObject method takes six parameters: a pointertoabind context, the interface identifier of the third parameter, the pointer to an interface of the object corresponding to the prefix moniker, the prefix moniker, the interface to which the caller wishes to bind, and an output parameter corresponding to the instantiated interface. In step 1301, the method invokes the FindLastElt method of the specified moniker to find its last component moniker. In step 1302, the method invokes the IidBindToObject method of the last component moniker. In step 1303, if this method returns ID_NULL, then the BindToObject method of the last component moniker needs to be invoked to determine the interface that is required for binding and the method continues at step 1304, else the method continues at step 1305. In step 1304, the BindToObject method invokes the BindToObject method of the last component moniker, passing it the first part of the composite moniker as its prefix moniker and returns. In step 1305, if the interface returned by the IidBindToObject method of the last component moniker is equal to ID_STORAGE, then the method continues at step 1306, else it continues its step 1307. In step 1306, the method invokes the BindToStorage method of the prefix moniker (variable rest). When it returns, variable pv points to a bound instance of the storage object corresponding to the prefix moniker and continues at step 1308. In step 1307, the method instead invokes the BindToObject method on the prefix moniker. In this case, it passes the interface requested by the last component moniker and the instantiated object corresponding to that interface is returned in the variable pv. In step 1308, the instantiated object pointed to by variable pv is registered in the bind context passed in. The bind context is a linked list of currently instantiated objects corresponding bound by previous invocations of the BindToObject method. The bind context is used by the BindToObject methods determine whether the object referred to by the specified moniker is already instantiated. In step 1309, the method invokes the BindToObject method for the last component moniker with the interface requested by the last component moniker, the instantiated interface corresponding to the moniker prefix, and the original interface requested in the original BindToObject call. The method then returns.

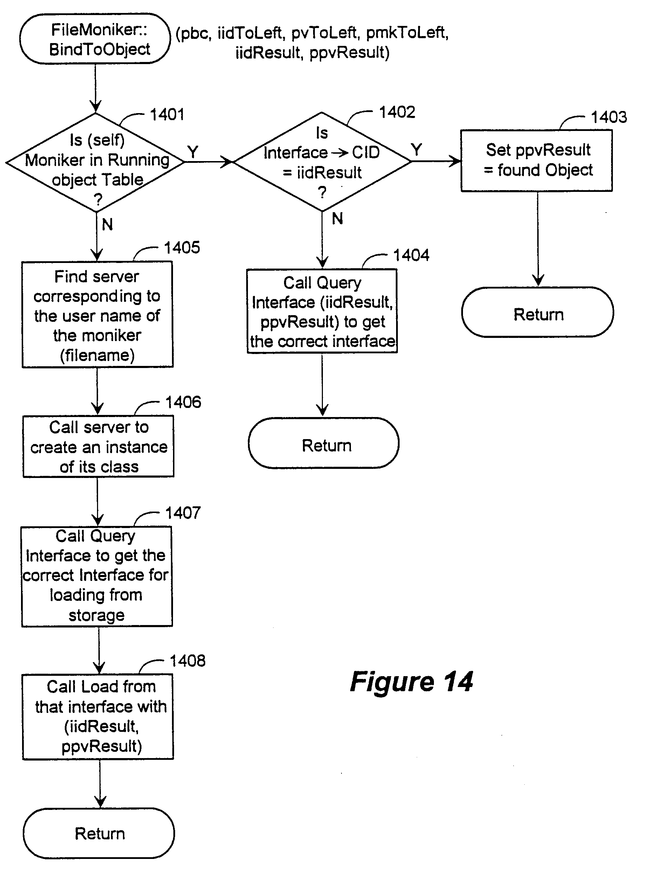

Figure 14 is a flow diagram of the BindToObject method for a typical implementation of a file moniker. This method determines whether an object corresponding to the specified file moniker exists as indicated by a Running Object Table and returns a pointer to the object. The Running Object Table contains pointer to all current instantiated object. Otherwise, this method locates the appropriate server and instantiates an interface to the file. The FileMoniker::BindToObject method takes the same six parameters listed in the generic composite moniker BindToObject method. In steps 1401 through 1404, the method uses the Running object Table to an object corresponding to determine whether the specified file moniker exists. In step 1401, the method determines whether the specified its moniker is listed in the Running Object Table. If it is, the method continues at step 1402, otherwise it continues at step 1405. In step 1402, the method determines whether the requested interface matches that in the Running Object Table. If it does, then in step 1403 the method returns a pointer to the interface. Otherwise, in step 1404, the method obtains the requested interface the by calling the QueryInterface method of the object found in the Running Object Table and returns. In step 1405, because the specified moniker was not found in the Running Object Table, this method finds the server corresponding to the specified moniker (filename). In step 1406, the method calls the server to create an instance of its class. In step 1407, the method calls the QueryInterface method of this instance to obtain the interface for binding. In step 1408, the method calls the Load method of the binding interface and returns.

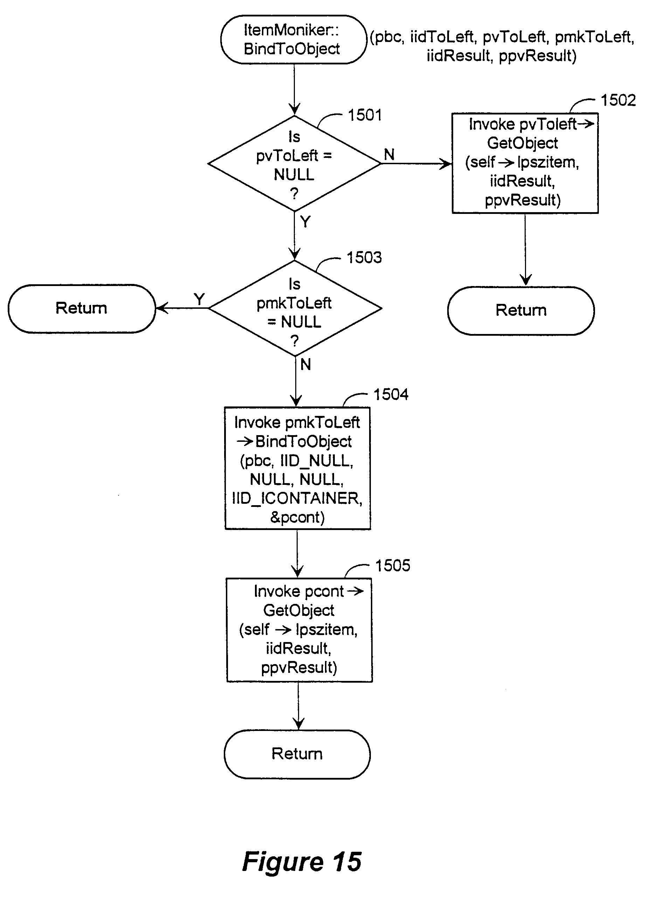

Figure 15 is a flow diagram of the BindToObject method for a typical implementation of an item moniker. In the above example, WItemMoniker and SItemMoniker both have similar implementations. This method uses the interface object of the prefix moniker to invoke its GetObject method. The GetObject method locates and binds to an instance of the object indicated by the ItemMoniker. This method takes the same six parameters passed to the BindToObject method of the generic composite moniker. In step 1501, the method determines whether an object was passed for binding. If it was, the method continues its step 1502, otherwise it continues at step 1503. In step 1502, the method invokes the GetObject method of the interface passed in to instantiate the object indicated by the item moniker and then return. In step 1503, if the prefix moniker is not NULL, the method continues at step 1504, otherwise it returns. In step 1504, the method invokes the BindToObject method of the prefix moniker, requesting the IContainer interface. In step 1505, the method invokes the GetObject method of the requested IContainer interface and returns.

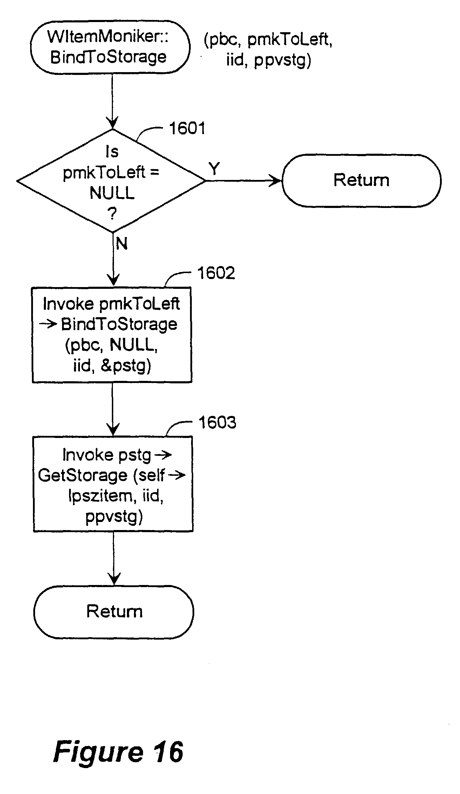

Figure 16 is a flow diagram of the BindToStorage method for a typical implementation of WItemMoniker. This method invokes the BindToStorage method of its prefix, and then, once it has obtained the storage handle for the prefix, it gets the storage associated with the specified moniker. In step 1601, the method determines whether the prefix passed in is NULL, and if it is, the method returns, otherwise the method continues its step 1602. In step 1602, the method invokes the BindToStorage method of the prefix moniker and passes it the requested interface. In step 1603, this method invokes the GetStorage method of the storage interface returned in step 1602 passing it the unique identifier for the object specified in the current WItemMoniker. The method then returns.

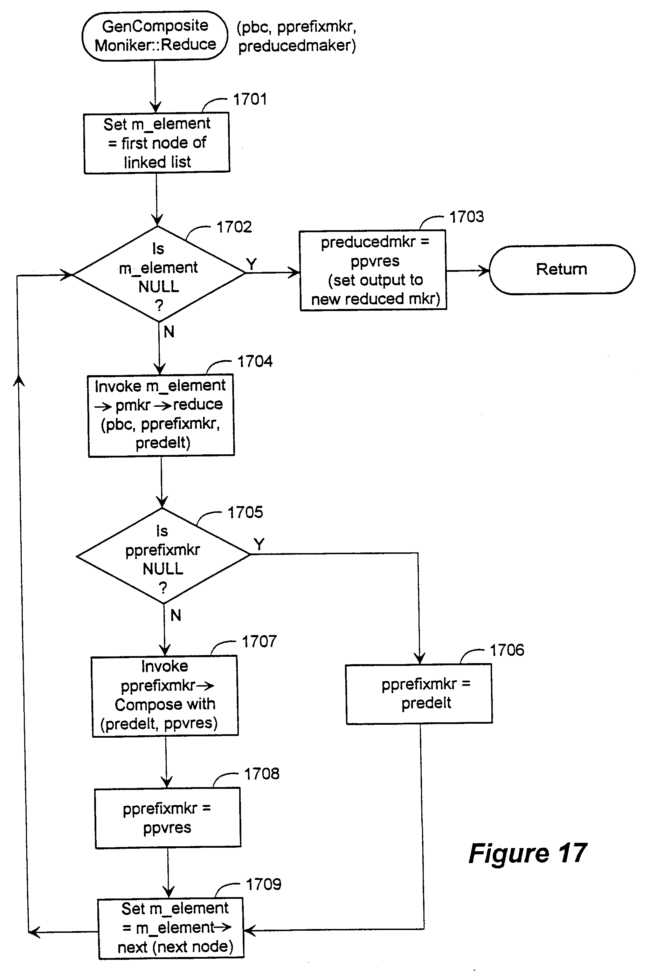

Figure 17 is a overview flow diagram for the Reduce method for the GenericCompositeMoniker interface. This routine attempts to reduce each component moniker by calling the reduce method of each component moniker and composes a new GenericCompositeMoniker with the reduced components. The method takes three parameters: a pointer to a bind context, a prefix moniker, and an output parameter for the reduced moniker. In step 1701, the method finds the first element in the linked list of component monikers comprising the specified moniker. In steps 1702 through 1709, the method iteratively ????? invokes the reduced method of each component moniker and produces a new composite moniker with reduced components. In step 1702, if all the elements of the linked list have been processed, the method continues at step 1703, otherwise it continues at step 1704. In step 1703, the method sets the output parameter to the new reduced composite moniker and returns. In step 1704, the method invokes the Reduce method of the moniker component pointed to by the variable M_Element, passing along the bind context and a pointer to the prefix moniker. The prefix moniker corresponds to the new composed moniker produced so far. In step 1705, if the method determines that the variable pointing to prefix moniker is NULL, it continues at step 1706, otherwise it continues at step 1707. In step 1706, if the variable pointing to the prefix moniker points to NULL (which happens on the first time through the loop), it is set to the reduced component moniker returned in step 1704 and the method continues at step 1709. In step 1707, if the variable pointing to the prefix moniker is not NULL, the method invokes the ComposeWith method of the prefix moniker to compose the prefix with the new reduced moniker returned in step 1704. In step 1708, the variable pointing to the prefix moniker is reset to the new composed result, which contains all of the moniker reductions that have occurred. In step 1709, the variable M_Element is advanced to the next element in the linked list of component monikers and the method returns to the top of the loop at step 1702.

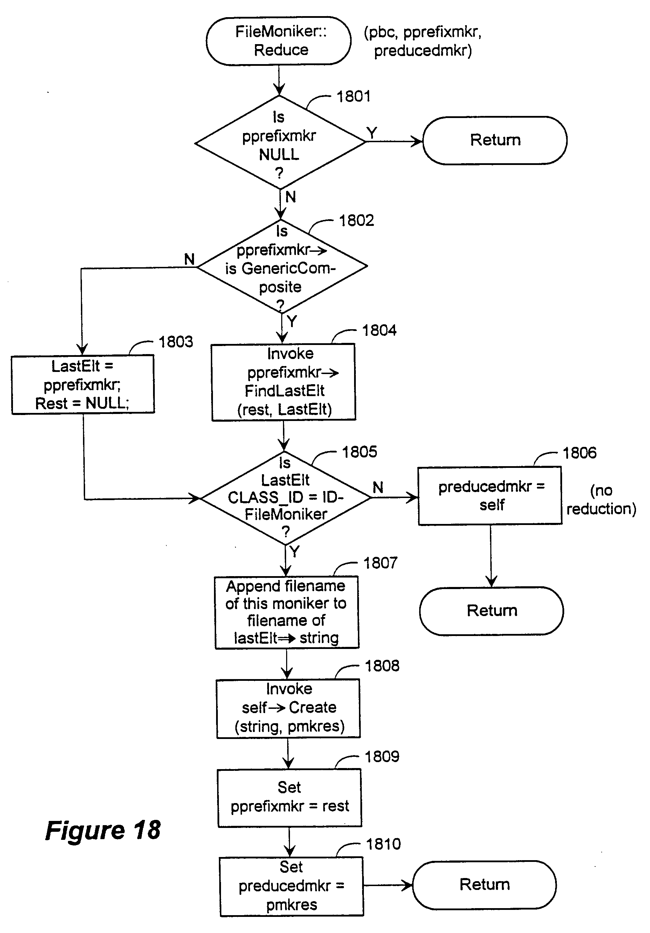

Figure 18 is a flow diagram of the Reduce method for a typical implementation of a FileMoniker. The Reduce method looks at the prefix moniker passed in and determines whether last component of the prefix moniker is another file moniker. If it is another File Moniker, this method returns a new composed FileMoniker that is the combination of the two FileMonikers into one. It also removes the file moniker it consumed from the prefix passed in. This function takes three parameters: a pointer to a bind context, a pointer to the prefix moniker, and an output parameter where the newly reduced moniker is returned. In step 1801, the function examines the prefix moniker passed in to see if it is NULL. If it is, the function returns, otherwise it continues at step 1802. In step 1802, the function looks at the prefix moniker to see if it is a generic composite moniker. If it is, the function continues at step 1804, else it continues at step 1803. In step 1803, the function sets the last element to the prefix moniker because the prefix is a simple moniker and continues at step 1805. In step 1804, the function invokes the FindLastElt method of the prefix moniker in order to obtain the last element of the prefix composite moniker. In step 1805, the CLASS_ID of the last element is checked to see if it is a file moniker. If it is not, the function continues at step 1806, otherwise it continues at step 1807. In step 1806, the function sets the output parameter to itself, because no reduction has occurred, and returns. In step 1807, the function appends the filename associated with this moniker to the filename of the moniker pointed to by the last element. Next, step 1808, the function invokes its own create method with this new filename string. In step 1809, it sets the prefix equal to what was the prefix minus the last element, or NULL if the prefix was not a composite moniker. In step 1810, the function sets the output parameter corresponding to the newly reduced moniker to the moniker created in step 1808 and the function returns.

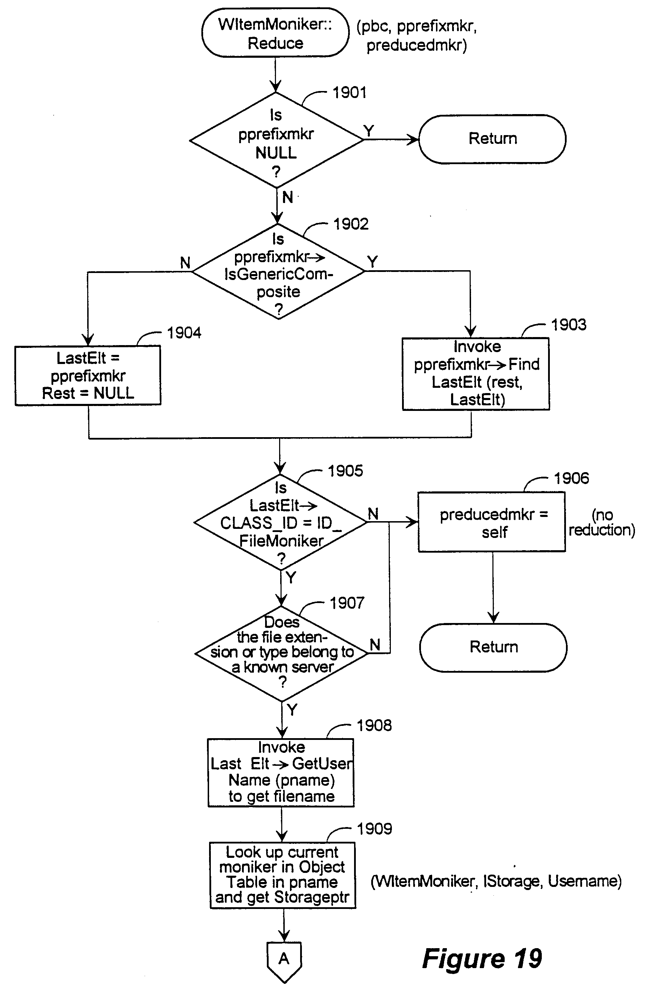

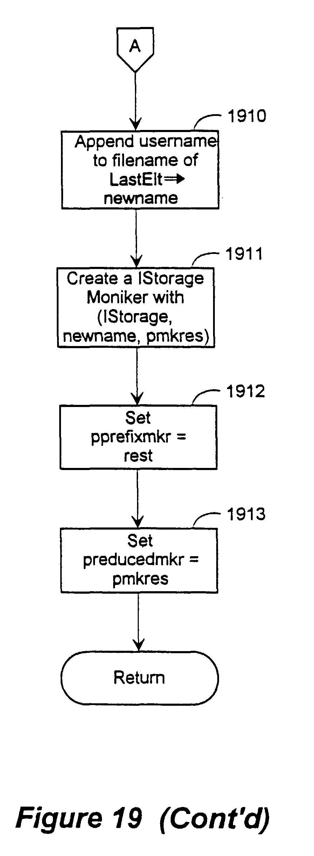

Figure 19 shows an overview flow diagram of the reduced method for a typical implementation of the word processing item moniker WItemMoniker. This routine returns a special kind of moniker, a storage moniker, which can be used by the bind-to-object method to invoke the server for an embedded object directly, thereby bypassing invoking the word processing application. It does this by looking in a special object table contained within the word processing document to find the appropriate storage pointer for the embedded object. This storage pointer is then composed in a storage moniker, and which its bind-to-object method is invoked, it can figure out which server to call. This routine takes three parameters: a pointer-to-a-bind context, a prefix moniker, and an output parameter that will contain the newly reduced moniker. In step 1901, the method looks to see if the prefix is Null, and if it is returns, otherwise, the method continues at step 1902. In step 1902, the method looks to see if the prefix is a generic composite moniker, and if it is, continues at step 1903, else it continues at step 1904. In step 1903, the function invokes the prefix monikers FindLastElt method to obtain a pointer-to-last moniker in the linked list. It then continues at step 1905. In step 1904, the method sets the last element pointer to the prefix because it is not a composite moniker. In step 1905, the method looks at the CLASS_ID of the last element to see if it is file moniker. If it is not, the function continues at step 1906, else it continues at step 1907. In step 1006, the function simply returns itself in the output parameter, because no reduction was possible. In step 1907, the method looks at the file extension or however it knows to determine whether the file belongs to the word processing application. If it determines the file is of an unknown type, the function continues at step 1906, else the function continues at step 1908. In step 1908, the method invokes the GetUser method of the moniker pointed to by the last element pointer in order to get the file name of the last element with prefix. In step 1909, it looks in the object table at a known location in the file name it obtained to find the entry corresponding to the current moniker. The elements in the table are in the form of a three tupple (WItemMoniker, IStorage, UserName). From this table, the method gets the storage pointer and the user name for the new moniker it will create. Next, in step 1910, it appends the username of the filename of the last element of the prefix to this new name it has obtained. In step 1911, the method creates a new IStorage moniker with the storage pointer and the new name. In step 1912, the prefix is set to the remainder of what was the prefix minus the last element. Finally, in step 1913, the output parameter is set to the new IStorage moniker created and the function returns.

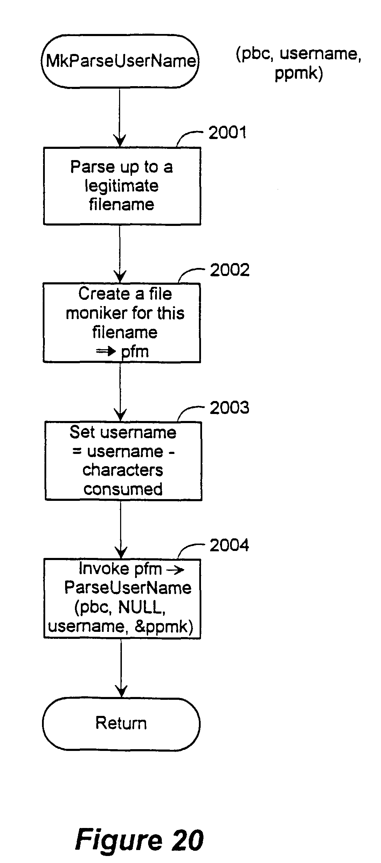

Figure 20 shows an overview flow diagram for the function MkParseUserName. This function takes a string name and returns its corresponding moniker. The moniker returned may be a composite moniker. In step 2001, the function parses the string to find a legitimate filename. In step 2002, the function creates a file moniker for this filename and saves it in the variable pfm. In step 2003, the function sets the string remaining to the initial string passed in minus the characters that were consumed. Finally, in step 2004, the function invokes the ParseUserName method for the file moniker pointed to by pfm and passes it the string remaining and the address of the return moniker. Once the file moniker ParseUserName method has returned, the rest of the string will have been parsed. The function then returns.

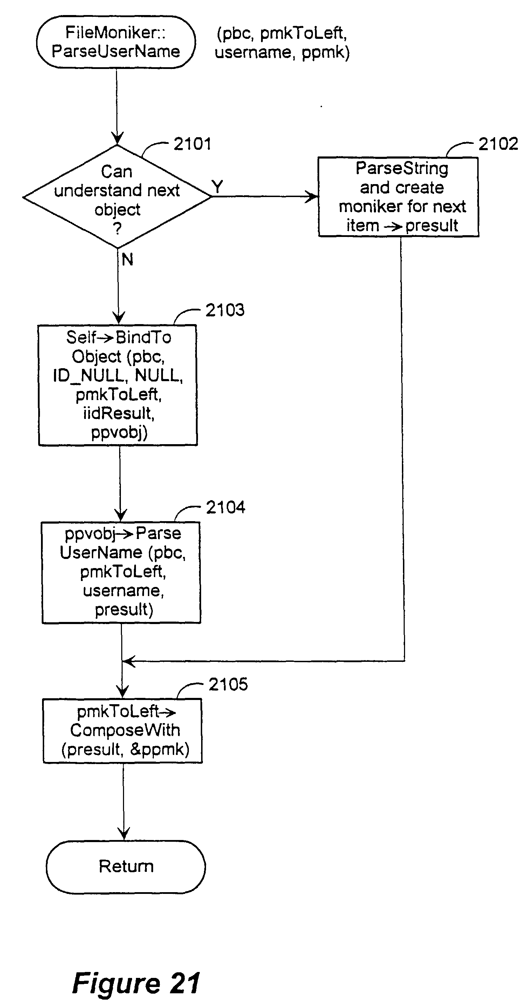

Figure 21 shows an overview flow diagram for the method ParseUserName for a typical implementation of a file moniker. Because it does not know the kinds of objects it can contain, the method must decide whether it needs to bind to the object indicated by the filename in order to parse the next part of the string. This method takes four parameters: appointed to a BindContext, the pointer to the prefix moniker, the string name remaining to be parsed, and a pointer to the resulting moniker. In step 2101, the method decides whether it can understand the syntax of the objects that are contained within this file. If it can, the method continues at step 2102, otherwise it continues at step 2103. In step 2102, the method calls its internal parse string routine and creates a moniker for the portion of the string it was able to parse. It then continues at step 2105. In 2103, the method calls BindToObject on itself, passing it the prefix that was passed to the ParseUserName method. Next, in step 2104, this method calls the ParseUserName method of the object that was bound to passing it the prefix and the user string remaining to be parsed. Finally, in step 2105, the ComposeWith method of the prefix is called to add the newly produced moniker. The function returns.

Although the present invention has been described in terms of a preferred embodiment, it is not intended that the invention be limited to his embodiment. Modifications within the spirit of the invention will be apparent to those skilled in the art. The scope of the present invention is defined by the claims which follow.

## Claims

1. A method of composing a first object with a second object, the first object having object code by invoking a compose function member of the object code of the first object, passing the second object, to create an instance of a composite object that refers to the composition of the first object with the second object.

2. The method of claim 1, the first object having naming information that refers to first data, the second object having naming information that refers to second data, wherein the invoking of the compose function member of the first object combines the naming information of the second object with the naming information of the first object using knowledge of the structure and semantics of the second object when creating the instance of the composite object.

3. The method of claim 1 including:
providing an instance of the identifier object, the identifier object having object code with an inverse function member for generating the inverse of the identifier object; and
invoking the inverse function member to create an inverse identifier object, wherein the composition of the created inverse identifier object with the identifier object results in a null reference.

4. The method of claim 3, further comprising the returning of the created inverse identifier object.

5. A system for composing a plurality of identifier objects to create a composite identifier object that refers to a source object, each identifier object referring to a portion of a path to the source object, comprising:
a composite identifier object having binding code that, when invoked, locates and connects to the source object referred to by the created composite identifier object; and
for each of the plurality of identifier objects, a reference to the identifier object in the created composite identifier object, wherein the identifier objects are composed with each other to refer to the source object.

6. The system of claim 5 further including a component for binding to a source object, the source object being identified by a composite identifier object, the composite identifier object having a first identifier object and a second identifier object, by:
when binding code of the composite identifier object is invoked, invoking binding code of the second identifier object passing a reference to the first identifier object; and
when a binding code of the second identifier object is invoked,
invoking binding code of the first identifier object to bind to a container object referred to by the first identifier object;
receiving a reference to the bound container object referred to by the first identifier object; and
using the received referenced to the bound container object to locate and connect to an item referred to by the second identifier object, thereby binding to the source object referred to by the composite identifier object.
